# EUROPEAN PATENT APPLICATION

(11) **EP 3 520 955 A1**
(43) Date of publication of application: **07.08.2019**
(21) Application number: 17855925.8
(22) Date of filing: 21.09.2017
(51) Int. Cl.: B23Q 1/01, B24B 41/02

(54) **MACHINE TOOL BED AND MACHINE TOOL**

(30) Priority: 30.09.2016 JP 2016192616
(71) Applicant: Komatsu NTC Ltd., Nanto-City, Toyama Toyama 939-1595 (JP)
(72) Inventor: MICHIYOSHI Kazunori, Nanto-city Toyama 939-1595 (JP); KOGURA Kazuya, Nanto-city Toyama 939-1595 (JP); HAMANO Takashi, Tokyo 107-8414 (JP); DAIKU Shouichi, Tokyo 107-8414 (JP)
(74) Representative: Murgitroyd & Company
(86) International application number: PCT/JP2017/034072
(87) International publication number: WO 2018/061970

(57) **Abstract**

Provided is a bed (10) used for a grinding machine (1). The bed has a bed front part (11) on which a workpiece support device (20) is mounted and a bed rear part (15) on which a grinding wheel stand (30) is mounted. An upper portion (12) of the bed front part (11 ) protrudes further to both of the left and the right than a lower portion (13) . A front installation section (17a) is provided in the lower portion (13), and in the bed rear part (15), two rear installation sections (17b) are provided spaced apart from each other in the left-right direction. In this configuration, resonant vibration of the bed (10) due to the vibration of the grinding wheel stand (30) can be suppressed.

## Description

### TECHNICAL FIELD

The present invention relates to a machine tool bed and the machine tool.

### BACKGROUND ART

As a grinding machine (machine tool), there is known one comprising a rectangular parallelepiped bed, a workpiece support device for supporting a workpiece, and a grinding wheel stand having a grinding wheel, and the workpiece support device and the grinding wheel stand are mounted on an upper surface of the bed (for example, refer to Patent literature 1).

### PRIOR ART LITERATURE

### PATENT LITERATURE

Patent literature 1: JP 2007-152534, A

### SUMMARY OF THE INVENTION

### PROBLEMS TO BE SOLVED BY THE INVENTION

However, when the bed of the above-mentioned conventional grinding machine resonates because of the vibration caused during processing of a workpiece, the amplitude of the vibration of the bed becomes large. For this reason, there is a problem that the processing precision for a workpiece becomes lower.

It is an object of the present invention to resolve such a problem to provide a bed that can suppress resonant vibration due to the vibration of the processing device and a machine tool provided with the bed.

### MEANS FOR SOLVING THE PROBLEMS

In order to solve the problem, the present invention provides a bed for a machine tool, the bed including: a bed front part on which a workpiece support device for supporting a workpiece is mounted; and a bed rear part on which a processing device for processing the workpiece is mounted. The bed front part includes an upper portion and a lower portion arranged under the upper portion. The upper portion protrudes further to both of a left and a right than a lower end of the lower portion. And a front installation section is provided on a bottom surface of the lower portion and two rear installation sections are provided on a bottom surface of the bed rear part. The two rear installation sections are arranged with a space between the two in a left-right direction.

In order to solve the problem, the present invention provides a machine tool that includes a bed; a workpiece support device for supporting the workpiece; and a processing device for processing the workpiece. The bed includes a bed front part and a bed rear part. The workpiece support device is mounted on an upper surface of the bed front part, and the processing device is mounted on an upper surface of the bed rear part. The bed front part has an upper portion and a lower portion arranged under the upper portion. The upper portion protrudes further to both of a left and a right than a lower end of the lower portion. And a front installation section is provided on a bottom surface of the lower portion and two rear installation sections are provided on a bottom surface of the bed rear part. The two rear installation sections are arranged with a space between the two in a left-right direction.

In the invention, the three-point support of the bed on a floor is performed by the front installation section and the left and right rear installation sections. And the heavy processing device is arranged on the two rear installation sections side, and the workpiece support device is arranged on the front installation section side.

In the bed of the invention, the left and right of the lower end of the lower portion locate at inward positions than the left and right surfaces of the upper portion of the bed front part. That is, both the left and right side areas with respect to the front installation section of the bed of the invention are lightened compared to a rectangular parallelepiped bed supported by three-point support.

Note that, both the left and right side areas with respect to the front installation section of a conventional rectangular parallelepiped bed supported by three-point support are areas having less influence upon the rigidity of the whole bed.

In the bed and the machine tool of the invention, both the left and right side areas with respect to the front installation section of the bed supported by three-point support are lightened. Thereby, the vibration characteristic of the bed is set so that the characteristic frequency of the bed becomes high while ensuring the rigidity of the whole bed. Thus, resonance vibration of the bed due to the vibration of the processing device can be suppressed, so that processing precision of a workpiece can be improved.

In the bed for a machine tool above-mentioned, the lower portion of the bed front part may be configured so that a width of the lower portion in the left-right direction becomes larger from the lower end toward an upper end thereof.

This configuration can effectively lighten both the left and right side areas with respect to the front installation section while sufficiently ensuring the rigidity of the bed front part.

### EFFECT OF THE INVENTION

In the bed and the machine tool of the present invention, the vibration characteristic of the bed is set so that resonant vibration of the bed due to the vibration of the processing device can be suppressed while ensuring the rigidity of the whole bed. Hence, the processing precision of a workpiece can be improved.

### BRIEF DESCRIPTION OF THE DRAWINGS

FIG. 1 is a perspective view viewed from upper right and front side and showing a grinding machine according to an embodiment of the present invention;
FIG. 2A is a front view of the grinding machine according to the embodiment of the present invention;
FIG. 2B is a bottom view of the grinding machine according to the embodiment of the present invention;
FIG. 3A is a perspective view viewed from upper right and front side and showing a bed according to the embodiment of the present invention; and
FIG. 3B is a perspective view viewed from upper left and front side and showing the bed according to the embodiment of the present invention.

### MODE FOR CARRYING OUT THE INVENTION

Hereinafter, an embodiment of the present invention will be explained in detail appropriately with reference to the drawings. In the embodiment, a grinding machine 1 which a bed of the present invention is applied to and is one type of a machine tool of the present invention will be explained.

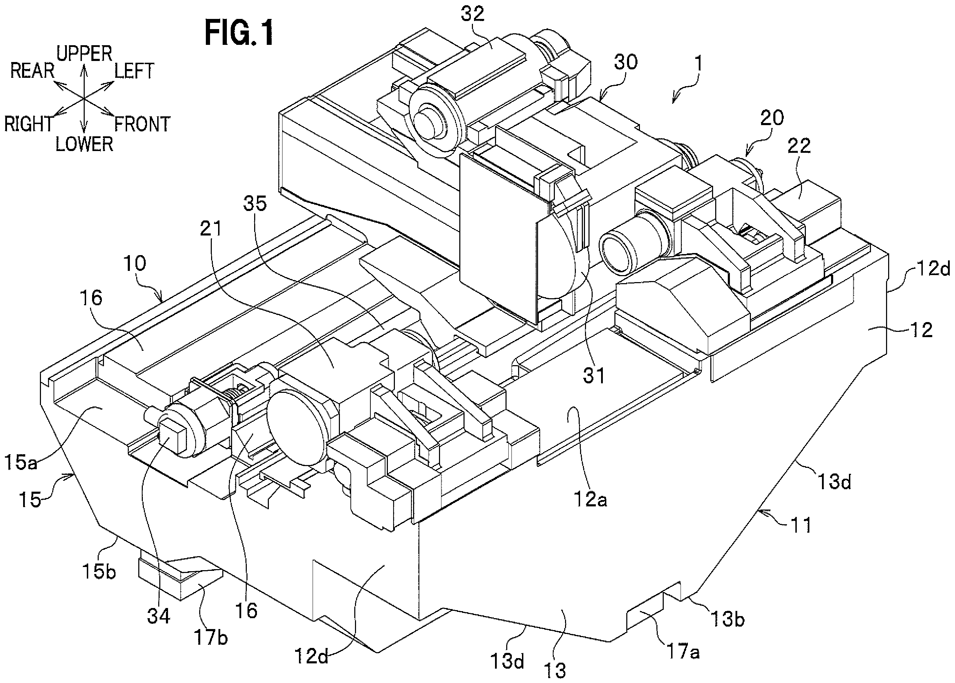

The grinding machine 1 of this embodiment (machine tool in claims) is provided, as shown in FIG. 1, with a bed 10, a workpiece support device 20 for supporting a workpiece (not shown), and a grinding wheel stand 30 (processing device in claims) having a grinding wheel 31.

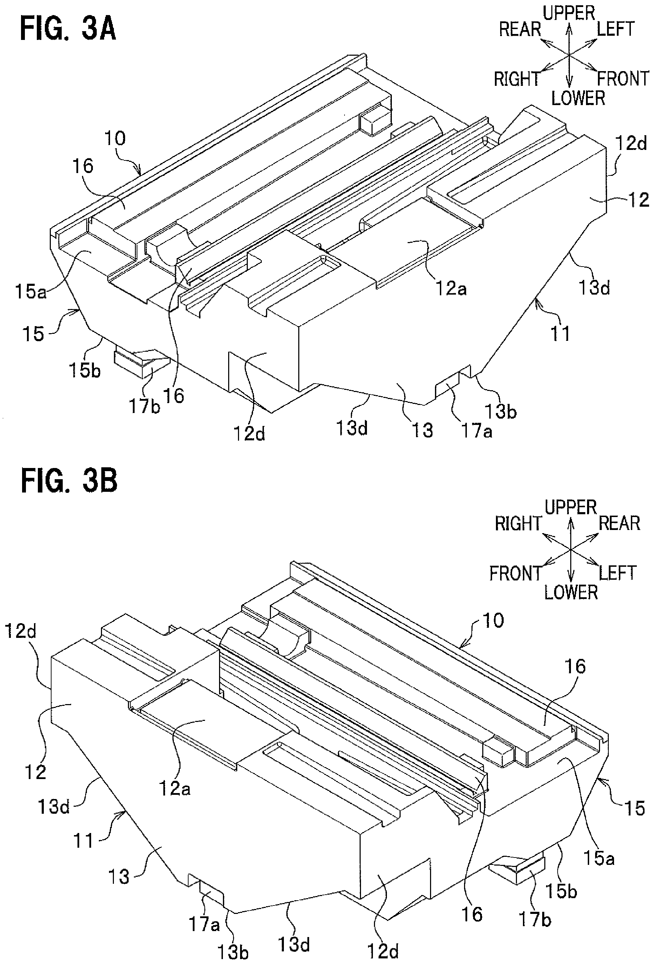

As shown in FIG. 3A and FIG. 3B, the bed 10 is a metallic member having a rectangular shape in plan view. The bed 10 is a base member of the grinding machine 1 and installed on a floor of a factory.

As shown in FIG. 1, a bed front part 11 is formed in a front part of the bed 10. The workpiece support device 20 is mounted on the bed front part 11. On the other hand, a bed rear part 15 is formed in a rear part of the bed 10. The grinding wheel stand 30 is mounted on the bed rear part 15.

The bed front part 11 and the bed rear part 15 are integrally formed to be the bed 10. In the embodiment, a front side approximately 1/3 zone of the length of the bed 10 in a front-rear direction is the bed front part 11, and a rear side approximately 2/3 zone of the same is the bed rear part 15.

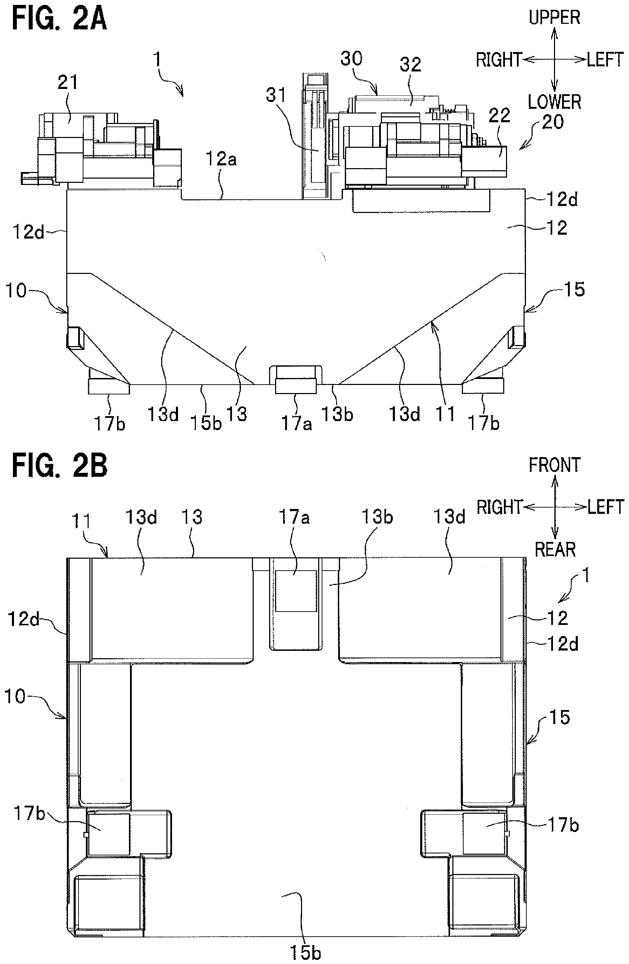

The bed rear part 15 has an approximately rectangular parallelepiped shape as shown in FIG. 3A and FIG. 3B (refer to also FIG. 2B). Front and rear guides 16, 16 are provided on an upper surface 15a of the bed rear part 15. Each of the guides 16, 16 extends in a left-right direction, and is arranged with a space between the two guides 16, 16 in the front-rear direction.

The bed front part 11 has an upper portion 12 and a lower portion 13 arranged under the upper portion 12.

The upper portion 12 of the bed front part 11 has a rectangular parallelepiped shape. A width of the upper portion 12 in the left-right direction is the same as the width of the bed rear part 15 in the left-right direction (refer to FIG. 2B).

As shown in FIG. 2A, the lower portion 13 of the bed front part 11 is formed under the upper portion 12. The maximum width of the lower portion 13 in the left-right direction is smaller than the width of the upper portion 12 in the left-right direction. That is, the upper portion 12 protrudes further to both the left and right than the whole lower portion 13.

The lower portion 13 has a shape that a width thereof in the left-right direction becomes gradually larger from the lower end to the upper end thereof. The lower portion 13 has a trapezoid shape in a front view, and the lower base is shorter than the upper base.

Left and right side surfaces 13d, 13d of the lower portion 13 are inclined surfaces extending obliquely upward from left and right edges of a bottom surface 13b.

The bottom surface 13b of the lower portion 13 and a bottom surface 15b of the bed rear part 15 are located on the same plane (refer to FIG. 2B) . And the bottom surface 13b of the lower portion 13 is located in the middle of the bed front part 11 in the left-right direction.

The left and right side surfaces 13d, 13d of the lower portion 13 are recessed relative to left and right side surfaces 12d, 12d of the upper portion 12. Thus, in the bed front part 11, there are spaces on left and right side areas with respect to the lower portion 13, each space having an approximate triangle shape. That is, the bed 10 has a shape that both the left and right side zones with respect to a section to become the lower portion 13 of the bed front part 11 are cut off from the block having a rectangular parallelepiped shape.

As shown in FIG. 2B, the bed 10 of the embodiment is configured to be supported by three installation sections 17a, 17b as three-point support to be placed on a floor.

Each installation section 17a, 17b is a plate-like member to be placed on the floor. One front installation section 17a and two rear installation sections 17b, 17b are provided.

The front installation section 17a is provided on the bottom surface 13b of the lower portion 13 of the bed front part 11. That is, the front installation section 17a is arranged in the middle of a front end portion of the bed 10.

The two rear installation section 17b, 17b are provided on the bottom surface 15b of the bed rear part 15. Both the rear installation sections 17b, 17b are arranged with a space between the two in the left-right direction. In other words, the rear installation sections 17b, 17b are arranged at left and right edge portions of the bed rear part of the bed 10, respectively.

In a case where the bed 10 is installed on a floor, the bed 10 can be placed on the floor horizontally and stably via the three installation sections 17a, 17b which are arranged in the middle of the front end portion of the bed 10 and at the left and right edge portions of the rear part of the bed 10.

In the grinding machine 1 of the embodiment, as shown in FIG. 1, the workpiece support device 20 and the grinding wheel stand 30 are mounted on an upper surface 12a and the upper surface 15a of the bed 10, respectively.

The workpiece support device 20 is provided with a headstock 21 for keeping a workpiece (not shown) and a tail stock 22 capable of supporting the rotated workpiece.

The grinding wheel stand 30 is a processing device for processing a workpiece, and has a grinding wheel 31 having a disk shape and a drive motor 32 for rotating the grinding wheel 31.

The headstock 21 and the tail stock 22 of the workpiece support device 20 are mounted on the upper surface 12a of the upper portion 12 of the bed front part 11.

As shown in FIG. 2A, the headstock 21 is mounted in a right side area of the upper surface 12a of the upper portion 12 of the bed front part 11. The tail stock 22 is mounted in a left side area of the upper surface 12a of the upper portion 12.

As shown in FIG. 1, the grinding wheel stand 30 is mounted on the two guides 16, 16 on the upper surface 15a of the bed rear part 15. A drive motor 34 and a ball screw 35 are arranged between the two guides 16, 16 on the upper surface 15a of the bed rear part 15. The ball screw 35 extends toward the left from the drive motor 34. The ball screw 35 is screwed with an under portion of the grinding wheel stand 30. The drive motor 34 rotates the ball screw 35 in forward and backward directions, so that the grinding wheel stand 30 moves along the two guides 16, 16 in the left-right direction.

In the grinding machine 1 of the embodiment, a workpiece (not shown) can be supported between the headstock 21 and the tail stock 22 of the workpiece support device 20, and the grinding wheel 31 of the grinding wheel stand 30 can grind the outer surface of the workpiece.

In the grinding machine 1 of the embodiment, the workpiece support device 20 is mounted on the bed front part 11, and the grinding wheel stand 30 is mounted on the bed rear part 15. Namely, the heavier grinding wheel stand 30 is located on the two rear installation sections 17b, 17b side (refer to FIG. 2B), and the workpiece support device 20 is located on the front installation section 17a side (refer to FIG. 2B).

In the bed 10 of the grinding machine 1 mentioned above, as shown in FIG. 2A, the left and right side surfaces 13d, 13d of the lower portion 13 of the bed front part 11 are recessed relative to the left and right side surfaces 12d, 12d of the upper portion 12 of the bed front part 11. That is, both the left and right side areas with respect to the front installation section 17a of the bed 10 are lightened compared to a bed having a rectangular parallelepiped shape supported by three-point support.

The structure supported by three-point support like the bed 10 of the embodiment in which the left and right side areas with respect to the front installation section 17a are lightened can reduce the strength of the force that swings the bed 10 in the left-right direction with the front installation section 17a as a fulcrum. Thus, the characteristic frequency of the bed 10 becomes high.

Note that, left and right side portions with respect to the front installation section of a conventional bed having a rectangular parallelepiped shape supported by three-point support are portions that don't largely affect the rigidity of the whole bed. That is, the bed 10 of the embodiment is a bed that portions unnecessary for the rigidity are cut off from the conventional bed having the rectangular parallelepiped shape. In the consequence, the vibration characteristic of the bed is set so that the characteristic frequency thereof becomes high.

As shown in FIG. 1, the bed 10 and the grinding machine 1 of the embodiment can suppress resonant vibration of the bed 10 due to the vibration caused during processing of a workpiece while keeping the rigidity of the whole bed 10. Therefore, the workpiece (not shown) can be accurately processed.

As shown in FIG. 2A, in the bed 10, the lower portion 13 of the bed front part 11 is formed so that the width thereof in the left-right direction becomes larger as it goes toward the upper end from the lower end. This configuration can effectively lighten the left and right side areas with respect to the front installation section 17a while sufficiently keeping the rigidity of the bed front part 11.

In the above, the embodiment of this invention has been explained, but this invention is not limited to the embodiment and can be appropriately modified without departing from the purpose.

In the embodiment, the lower portion 13 of the bed front part 11 is formed of a trapezoidal shape as shown in FIG. 2A, but is not limited to that shape.

For example, the lower portion 13 of the bed front part 11 may be formed so that the width thereof in the left-right direction becomes stepwise larger as it goes toward the upper end from the lower end thereof.

Furthermore, the lower portion 13 of the bed front part 11 may be formed so that the width thereof in the left-right direction does not change up to the upper end from the lower end. That is, the shape of the bed front part 11 in a front view may be a T shape.

In the bed 10 of the embodiment, the whole lower portion 13 of the bed front part 11 is formed to be smaller than the width of the upper portion 12 in the left-right direction. However, at least the lower end of the lower portion 13 has only to be smaller than the width of the upper portion 12 in the left-right direction.

In the embodiment, as shown in FIG. 1, the grinding machine 1 for grinding a workpiece has been explained, but the bed of the present invention can be applied to various types of machine tools such as a lathe or a machining center.

### DESCRIPTION OF THE SYMBOLS

- 1: Grinding machine
- 10: Bed
- 11: Bed front part
- 12: Upper portion
- 13: Lower portion
- 15: Bed rear part
- 16: Guide
- 17a: Front installation section
- 17b: Rear installation section
- 20: Workpiece support device
- 21: Headstock
- 22: Tail stock
- 30: Grinding wheel stand
- 31: Grinding wheel
- 32: Drive motor

## Claims

1. A bed for a machine tool, the bed comprising:
a bed front part on which a workpiece support device for supporting a workpiece is mounted; and
a bed rear part on which a processing device for processing the workpiece is mounted,
wherein the bed front part includes an upper portion and a lower portion arranged under the upper portion,
wherein the upper portion protrudes further to both of a left and a right than a lower end of the lower portion, and
wherein a front installation section is provided on a bottom surface of the lower portion and two rear installation sections are provided on a bottom surface of the bed rear part, the two rear installation sections being arranged with a space between the two in a left-right direction.

2. The bed for a machine tool according to claim 1,
wherein the lower portion of the bed front part is configured so that a width of the lower portion in the left-right direction becomes larger from the lower end toward an upper end thereof.

3. A machine tool comprising:
a bed;
a workpiece support device for supporting the workpiece; and
a processing device for processing the workpiece,
wherein the bed includes a bed front part and a bed rear part,
wherein the workpiece support device is mounted on an upper surface of the bed front part, and the processing device is mounted on an upper surface of the bed rear part,
wherein the bed front part includes an upper portion and a lower portion arranged under the upper portion,
wherein the upper portion protrudes further to both of a left and a right than a lower end of the lower portion, and
wherein a front installation section is provided on a bottom surface of the lower portion and two rear installation sections are provided on a bottom surface of the bed rear part, the two rear installation sections being arranged with a space between the two in a left-right direction.
